Europäisches Patentamt

(19) **European Patent Office**

**Office européen des brevets**

(11) Publication number: **0 074 154**

**A1**

(12) # EUROPEAN PATENT APPLICATION

(21) Application number: **82201091.4**

(22) Date of filing: **06.09.82**

(51) Int. Cl.³: **A 01 C 17/00**

(30) Priority: **07.09.81 NL 8104120**

(43) Date of publication of application:
**16.03.83 Bulletin 83/11**

(84) Designated Contracting States:
**DE FR GB NL**

(71) Applicant: **C. van der Lely N.V.**
**Weverskade 10 P.O. Box 26**
**NL-3155 ZG Maasland(NL)**

(72) Inventor: **van der Lely, Cornelis**
**7 Brüschenrain**
**Zug(CH)**

(74) Representative: **Mulder, Herman et al,**
**Octrooibureau Van der Lely N.V. 10 Weverskade**
**NL-3155 ZG Maasland(NL)**

(54) **A device for spreading granular and/or powdery material.**

(57) Flow of material to a distribution member (4) of a spreading device is controlled by delivery means (86). The delivery means (86) comprises four dosing plates (82, 83, 84, 85) which are independently displaceable relatively to each other and to the bottom (81) of a hopper of the device. The dosing plates (82, 83, 84, 85) and the bottom (81) have openings which cooperate with one another in an adjustable manner which makes it possible to adjust the position of delivery of material to the distribution member (4) both in radial and circumferential directions, and to adjust the size of the or each delivery orifice.

FIG.13

EP 0 074 154 A1

-1-

A DEVICE FOR SPREADING GRANULAR AND/OR POWDERY MATERIAL

This invention relates to a device for spreading granular and/or powdery meaterial, such as fertilizer, seeds or similar substances, comprising a frame with a hopper and at least one distribution member adapted to move around a rotary shaft.

According to the invention the hopper is provided with delivery means adapted to move with respect to the hopper in a manner such that the place where the material is fed to the distribution member is displaceable about the rotary axis of the distribution member and/or in a radial direction relative to the rotary axis of the distribution member, the circumferential angle through which the material leaves the circumference of the distribution member being adjustable. In this way a spreading device is obtained by which the material can be spread in many ways so that during its travel the device can spread the material at will for example, either on a narrow strip or on a very wide strip. Owing to this great adjustability a very satisfactory distribution pattern can be obtained, whilst the device can be advantageously employed for a variety of dispensing operations.

An advantageous embodiment is obtained when the delivery means are adjustably designed so that the portion of the feed range nearest the rotary axis of the distribution member and the portion of the feed range furthest remote from the rotary axis of the distribution member are relatively adjustable about the rotary axis of the distribution member. This adjustability permits of controlling the feed of material within wide limits.

According to a further aspect of the invention one outlet port of the delivery means is further away from the rotary axis of the distribution member than is a further outlet port of the delivery means, and the two outlet ports can be closed to a greater or lesser extent independently of each other. In this way the possibilities of setting different modes of spreading can be enhanced.

In a further development of the device embodying the invention the hopper is provided with delivery means comprising four relatively displaceable dosing plates, each of which has at least one outlet port, whilst two sets of identical dosing plates are formed. This permits of feeding the material in many ways within very wide limits to the distribution member, so that the spreading sectors can be effectively determined.

For a better understanding of the present invention and to show how it may be carried into effect, reference will now be made, by way of example, to the accompanying drawings, in which:

Figure 1 is a front view of a spreading device embodying the invention;

Figure 2 is a side elevation of the device taken in the direction of the arrow II in Figure 1;

Figure 3 is a plan view of the device shown in Figures 1 and 2;

Figure 4 is a plan view of the device of Figures 1 to 3, the hopper being omitted;

Figure 5 is an enlarged view of part of Figure 4, the distribution members being omitted;

Figure 6 is an enlarged sectional view taken on the line VI-VI in Figure 4;

Figure 7 is an exploded view, in the direction of the arrow VII in Figure 6, of a dosing mechanism;

Figure 8 is a plan view of the hopper bottom;

Figure 9 is a plan view of a first dosing disc;

Figure 10 is a plan view of a second dosing disc;

Figure 11 is a plan view of a third dosing disc;

Figure 12 is a plan view of a fourth dosing disc;

Figure 13 is a plan view of the dosing mechanism and a distribution member;

Figure 14 is a plan view corresponding to Figure 13 but shows the parts in a different operative condition.

The spreading device illustrated in the Figures comprises a frame 1, on which a hopper 2 is arranged and which is provided with two distribution members 3 and 4, which are located beneath the hopper. The frame 1 has a symmetrical shape with respect to the vertical plane 7 going through the longitudinal centre line of the device and extending in the intended direction 69 of operative travel of the device. The frame comprises two side beams 5 and 6 bent in the form of a U and extending parallel to the plane 7. Each of the side beams 5 and 6 has a straight upper limb 8 and a straight lower limb 9, these limbs being horizontal in the horizontal position of the device. The limbs 9 of the frame beams 5 and 6 are interconnected by a square-section, hollow transverse beam 10 and a channel-shaped rear beam 11 fastened to the ends of the limbs 9. The limbs of the rear beam 11 have holes 12, the centres of which are located in the longitudinal plane 7. The limbs 8 are interconnected by a v-shaped tie beam 12 fastened to the upper surfaces of the limbs 8 and being furthermore fastened to the beams 5 and 6 by struts 14. The tie beam 13 slopes upwardly and forwardly away from the limbs 8 at an angle of about 45°. At their curved leading portions the beams 5 and 6 are each provided with two coupling strips 15, and the curved top part of the beam 13 is provided with coupling strips 16.

Each of the side beams 5 and 6 is provided with an angle-section carrying beam 20, which is parallel to the limbs 8 and 9. The carrying beams 20 extends away from the curved parts of the side beams 5 and 6 in the same direction as the limbs 8 and 9 and from the curved parts they extend to the rear with respect to the direction 69. The connection of the carrying beams 20 with the side beams is reinforced by vertical stiffening plates 21 located between the respective limbs 8 and the beam 20. The carrying beams 20 are intercoupled by a horizontal gear box 22. The gear box 22 comprises a lower panel 23 to the ends of which are welded fastening plates 24 which are connected with the carying beams 20 by means of bolts 25. The gear box 22 comprises an upper panel 26, which is coupled with the lower panel by means of bolts 27. The bolts 27 extend across protruding rims 28 and 29 of the lower and upper panels and the lower and upper panels are symmetrical with respect to the horizontal plane where the lower and upper panels join one antoher as is shown in the Figures.

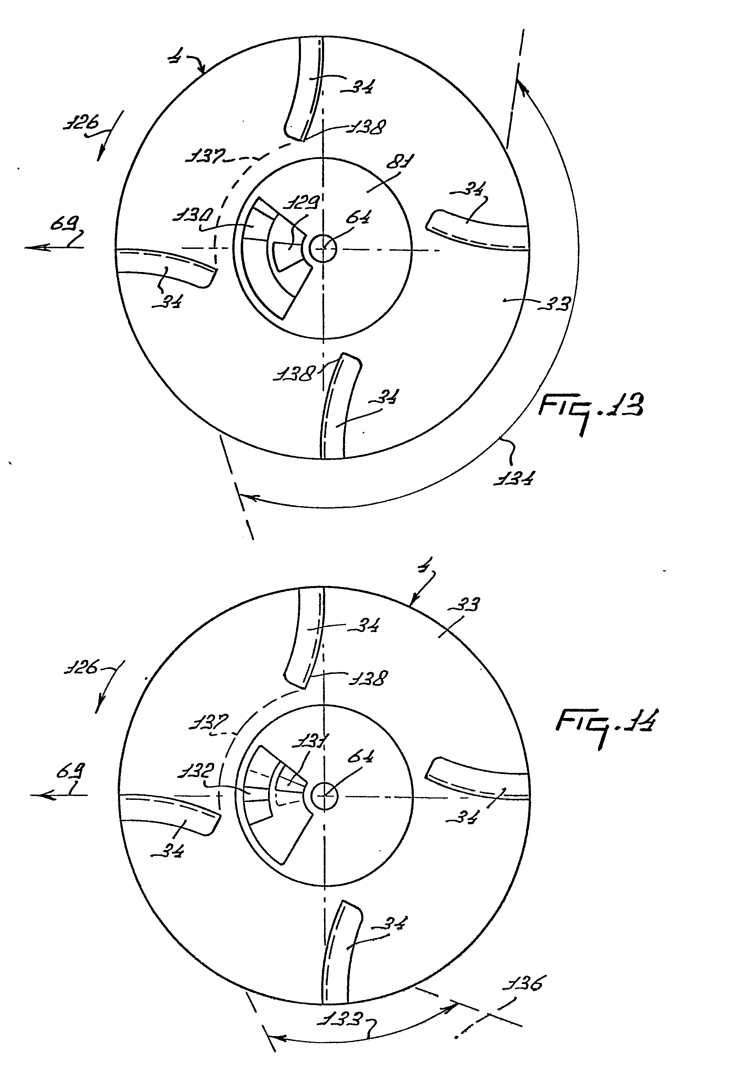

In the gear box 22 are journalled parallel shafts 31 and 32 extending upwards in a vertical direction. On these shafts are arranged the distribution members 3 and 4 as is shown in detail in Figure 6 for the shaft 32. Each of the distribution members 3 and 4 comprises a plate 33 fastened at right angles to the shaft concerned and provided with ejection blades 34. The plates 33 of the two distribution members are located with their ejection blades at the same level and are rotatable in the same plane. The ejection blades 34 of the two distribution members are offset from one another with the result that they pass alternately the point of closest approach of the two distribution members.

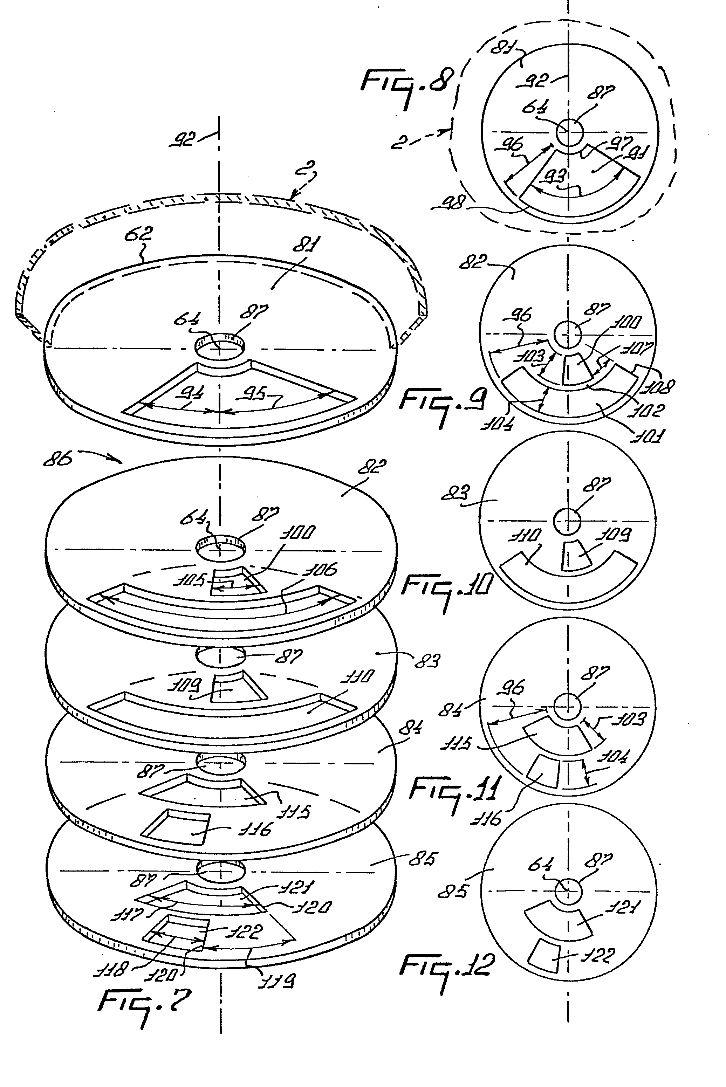

As is shown in Figure 6 for the shaft 32, the shafts 31 and 32 are journalled in a bearing housing 35 arranged in the lower panel 23 and a bearing housing 36 arranged in the upper panel 26. The shafts 31 and 32 are provided with spur gear wheels 37 and 38, located in the gear box. Between the gear wheels 37 and 38 are arranged two gear wheels 39 and 40. The gear wheels 37 to 40 are in horizontal positions and in mesh with one another as will be apparent from Figures 4 and 5. The gear wheels 39 and 40 are arranged on vertical shafts 41 and 42, which are journalled in the gear box in bearing housings corresponding with the bearing housings 35 and 36 of Figure 6. The shaft 42 extends downwards across the bearing housing in the lower panel and its lower end is located in a gear box 43 forming a driving box. The gear box 43 is arranged in a manner not shown in detail at the lower side of the gear box 22 and is provided with a driving shaft 44, which extends in a horizontal direction in the horizontal position of the device and whose end 45 emerging from the front side of the gear

box 43 constitutes a coupling part. The shaft 44 is provided with a spur gear wheel 46, which co-operates with a spur gear wheel 47. The gear wheel 47 is arranged on a shaft 48 which is journalled in the gear box 43 and is parallel to the shaft 44. The shaft 48 is provided with a bevel gear wheel 49 which is in mesh with a bevel gear wheel 50 on the shaft 42. The gear wheels 46 and 47 are releasably arranged on the shafts 44 and 48 respectively and constitute with one another and, as the case may be, with other sets of gear wheels, exchangeable and interchangeable sets of wheels. The gear box 43 is provided with a readily removable cover 51 for exchanging and interchanging the gear wheels 46 and 47. The cover 51 is provided to this end with knobs 52.

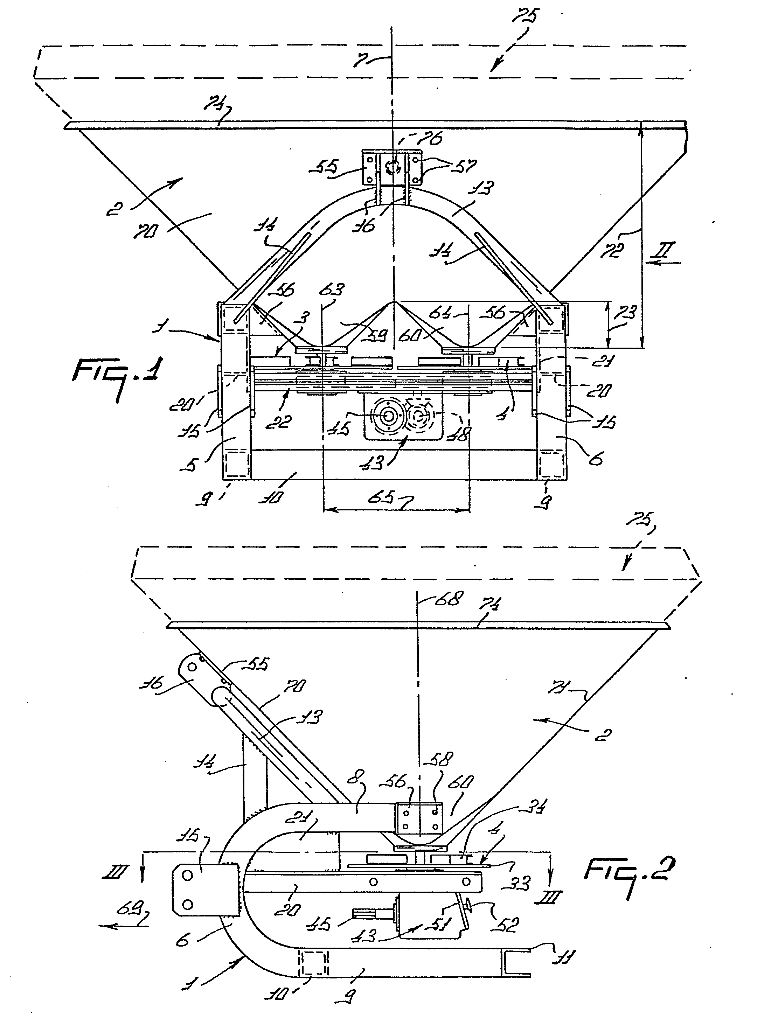

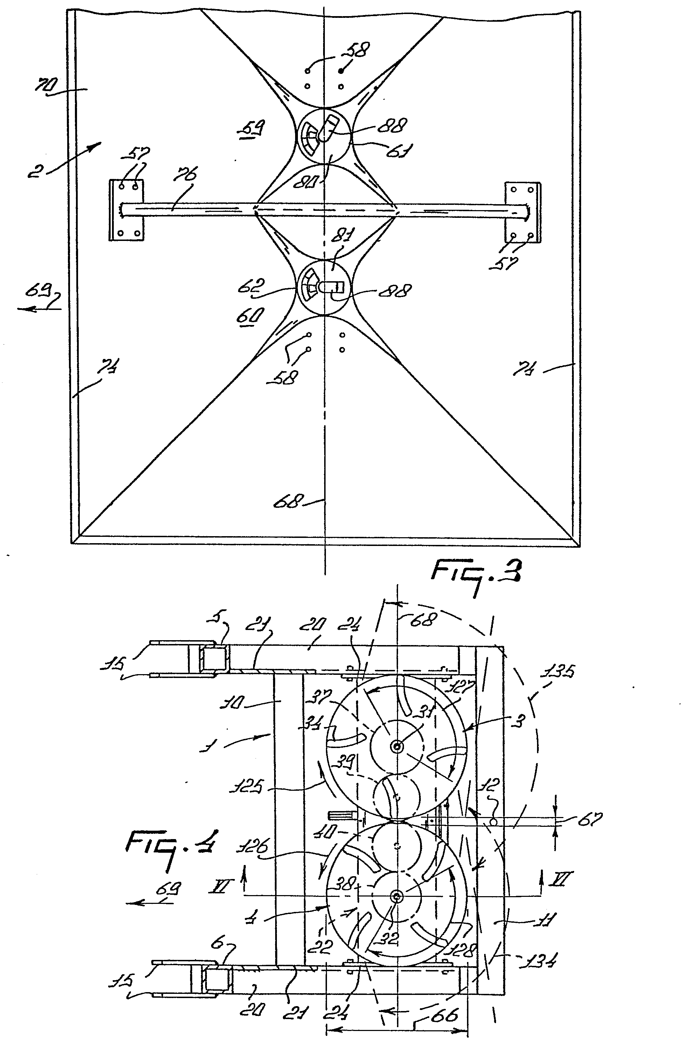

At the coupling strips 16 the frame 1 is provided with a fastening plate 55 and the ends of the limbs 8 of the side beams 5, 6 are provided with supports 56. The hopper 2 is mounted on the frame 1 on the fastening plate 55 and the supports 56 by means of bolts 57 and 58 respectively. The hopper 2 constitutes a single unit, which may be obtained by pressing a metal plate, whilst the two delivery spouts 59 and 60 are formed on the hopper 2. The hopper 2 has four flat sides and has a rectangular shape, viewed on plan. The delivery spouts 59 and 60 change from top to bottom into round bottom openings 61 and 62. The delivery spouts 59 and 60 are located above the distribution members 3 and 4 and the centre lines 63 and 64 of the shafts 31 and 32 coincide with the centre lines of the openings 61 and 62. The centre lines 63 and 64, which constitute rotary axes of the distribution members 3 and 4, are spaced apart by a distance 65, which is only slightly greater than the diameter 66 of the distribution members 3 and 4 as will be apparent from Figures 1 and 4. The proximal sides of the distribution members 3 and 4.

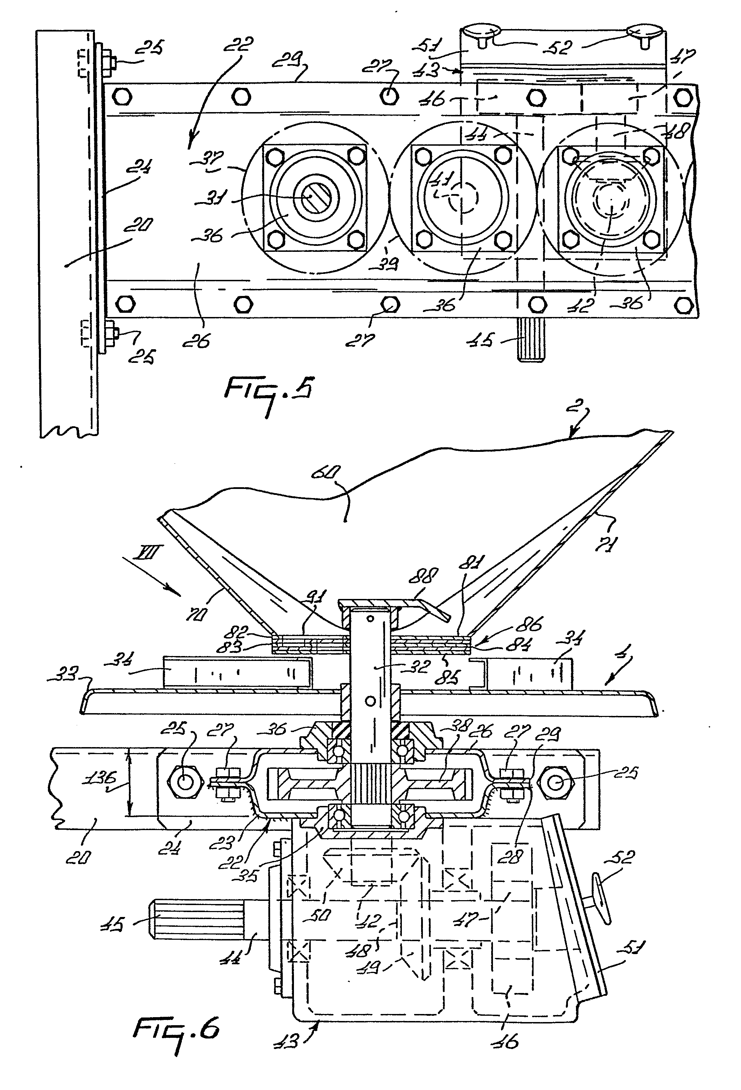

are spaced apart by a very short distance 67, for example, 2 cms. The two distribution members 3 and 4 are arranged side by side so that the centre lines 63 and 64 are located in a vertical plane 68 extending transversely of the direction 69, when the machine is in a horizontal position. The hopper 2 is symmetrical to the plane 7 as well as to the plane 68. The front and rear walls 70 and 71 respectively of the hopper are at an angle of 45° to the horizontal. The front wall 70 extends along the beam 13 (Figure 2). Near the top, the walls 70 and 71 are interconnected by a stiffening bar 76, which is horizontal in a horizontal position of the device and extends in the direction 69. The centre line of the stiffening bar 76 is located in the plane 7. The integral hopper has a height 72, which is four to five times the height 73 of the individual delivery spouts 59 and 60. The middle of each support 56 is located in the plane 68 and the limb 8 of each side beam 5 and 6 terminates in front of the plane 68, whereas the limb 9 of each of these beams is located at a distance behind the plane 68 such that, as viewed on plan, the beam 11 is further away from the plane 68 than is the circumference of each distribution member 3 and 4, as will be particularly apparent from Figures 2 and 4.

At the top, the hopper 2 has a bent-over rim 74, on which an extending piece 75 can be arranged to enlarge the hopper capacity. The extending piece 75 is indicated in Figures 1 and 2 by broken lines.

The bottom openings 61 and 62 of the delivery spouts 59 and 60 are provided with bottom plates 80 nd 81, which are rigidly secured to the undersides of the delivery spouts 59 and 60 respectively. Between the delivery spouts and the respective distribution members are arranged dosing mechanisms 86, each of which comprises four dosing plates 82, 83, 84, and 85, as is shown in detail for the dosing mechanism 86 between the bottom 81 and the distribution member 4. The bottom plate 81 and each of the dosing plates 82 to 85 have a central opening 87, through which extends the shaft 32 of the distribution member 4 down to the underside of the delivery spout 60. The centres of the openings 87 coincide with the rotary axis 64. In the delivery spout 60 the shaft 32 is provided with a member 88 affecting the material. The dosing plates 82 to 85 are adapted to turn about the shaft 32 with respect to one another and to the bottom 81. To this end each of the dosing plates 82 to 85 is connected with a setting mechanism by which they can be displaced and be maintained in a desired position relative to one another and to the bottom 81. The connection of the dosing plates with the setting mechanism and the setting mechanism are not shown in detail. The dosing plates 82 to 85 are arranged in the device in a manner not shown in detail so that they can be readily turned with respect to one another, whilst the dosing plate 82 can be readily turned with respect to the bottom 81.

Viewed with respect to the direction 69, in front of the shaft 32, the bottom plate 81 has a delivery orifice 91 extending to both sides of a vertical plane 92 extending in the direction 69 and containing the rotary axis 64. The delivery orifice 91 subtends an angle 93 of about 98° at the rotary axis 64. The orifice 91 covers an angle 95 of about 60° on the side of the vertical plane 92 remote from the spout 59 with the distribution member 3. On the side of the plane 92 where the delivery spout 59 is located, the orifice 91 covers a further angle 94 of about 38°. In a radial direction the orifice 91 covers a distance 96, which is substantially equal to the whole radial distance of the bottom plate 81, whilst only near the hole 87 there is a small rim 70 and near the outer circumference a small rim 98. The dosing plate 82 has passages 100 and 101 extending in a radial direction with respect to the rotary axis 64 over a distance equal to the distance 96 and, viewed in a radial direction, they are lcoated below the delivery orifice 91. The passages 100 and 101 are separated from one another by a small strip 102 and each of them covers equal distances 103 and 104, measured in a radial direction. The passage 100 covers an angle 105 of about 35° around the axis 64, whereas the passage 101 covers an angle 106 of about 115° around the rotary axis 64. The passage 100 is nearer the rotary axis 64 than the passage 101 and is located inside the angle 106 of the passage 101. The passage 100 is spaced apart by an angle 107 of about 30° from the end 108 of the passage 101. Said end 108 being remote from the side of the dosing plate directed to the interior of the device, or respectively, the other delivery spout 59.

The dosing plate 83 has passages 109 and 110, the size and location of which relative to one another and to the rotary axis correspond with those of the passages 100 and 101 of the dosing plate 82. The dosing plates 82 and 83 are identical. The dosing plate 84 has two passages 115 and 116 spaced apart in a radial direction to the rotary axis 64 by a distance such that the passage 115 is nearer the rotary axis 64 than the passage 116. The passages 115 and 116 extend in a radial direction, like the passages in the bottom 81 and the dosing plates 82 and 83, over a distance 96. In a radial sense the passages 115 and 116 cover equal distances 103 and 104 so that their distances from the rotary axis 64 correspond with the distances between the passages 100, 101 and 109, 110 and the axis 64. The passage 115 covers an angle 117 of about 90° around the rotary axis 64, whereas the passage 116 covers an angle 118 of about 25° around the axis 64. The passage 116 is located completely inside the angle 117 and the passage 116 is off-set through an angle 119 of about 30° with respect to the radial side 120 of the angle 115 remote from the medium side of the device or, respectively, the other delivery spout 59. The dosing plate 85 is identical to the dosing plate 84 and has two passages 121 and 122, the size of which is equal to that of the passages 115 and 116, whilst their positions relative to one another and to the rotary axis 64 are the same as those of the passages 115 and 116.

Like the bottom plate 81 the bottom plate 80 has a delivery orifice 91. However, the delivery orifice in the bottom plate 80 is located so that with the orifice 91 it is symmetrical to the vertical, longitudinal plane 7. Below the bottom plate 80 is arranged a dosing mechanism similar to the dosing mechanism 86 and also having four dosing plates similar to dosing plates 82 to 85. The passages in the dosing plates beneath the bottom plate 80, as stated for the delivery orifices in the bottom plates 80 and 81, are symmetrical to the vertical plane 7.

When the device is put into use, it is hitched via the coupling strips 15 and 16 to the three-point lifting device of a tractor. The coupling end 45 of the driving shaft 44 is coupled with the power take-off shaft of the tractor or a similar vehicle. The device serves to spread distributable material, particularly fertilizer, seeds or similar substances on a field. The material can be carried in the hopper 2. The amount of material carried for a single run may be raised by mounting the extension rim 75 on the upper rim 74 of the hopper 2 so that, for example, twice the initial amount of material can be carried by the device.

The material can be fed from the hopper 2 to the distribution members 3 and 4 through the delivery orifices 91 in the bottoms 80 and 81 and through the passages of the various dosing plates 82 to 85. For spreading the material the distribution members 3 and 4 are rotated in the direction of the arrows 125 and 126 from the power take-off shaft of the tractor via the driving shaft 44 and the gear wheels in the gear box 43 and the gear box 22. The distribution members rotate in opposite senses and the proximal sides of the distribution members move in the direction 69.

The direction in which the material is ejected by each of the distribution members having a given diameter 60 depends on the speed of rotation of the distribution member and the place where the material is fed from the hopper to the distribution member with respect to the rotary axis of the distribution member and the direction of movement 69. The speed of rotation of the distribution members 3 and 4 may be fixed at will at any one of several values by interchanging the gear wheels 46 and 47 or by exchanging these gear wheels for a different set of gear wheels. Within the limits imposed by the orifice 91 the place on each of the distribution members which receives the material can be changed by turning one or more of the dosing plates 82 to 85 with respect to one anotehr and/or with respect to the bottom 80 or 81 respectively. The passages 100 and 109 cooperating with one another constitute a port located below the orifice 91 of the bottom 81 and relatively near the rotary axis 64. The passages 116 and 122 of the dosing plates 84 and 85 form a port relatively remote from the rotary axis 64 below the orifice 91 and below the elongate passages 101 and 110. The passages 100 and 109 co-operate below the orifice 91 and above the passages 115 and 121 to form a port or delivery opening of a given size to deliver material out of the hopper. The place of the passages 100 and 109 within the circumferential angle 93 of the orifice 91 and the circumferential angle 117 of the
passages 115 and 121 is adjustable about the rotary
axis 64. The registering passages 116 and 122
constitute a port or outlet opening of a given size
below the orifice 91 and below the passages 101 and
110, said size being variable within the circumferential
angle 93 of the orifice 91 and the circumferential
angles 106 of the passages 101 and 110 about the rotary
axis 64. The sectors in which are located the various
orifices in the bottom and the various dosing plates
are chosen so that the port formed by the passages
100 and 109 and the port formed by the passages 116
and 122 can be shifted, within given limits, relatively
to one another and/or in common about the rotary axis
64 and be fixed. Therefore, the place receiving the
material on the distribution member concerned can be
widely varied. It is particularly important that,
measured in a radial direction, the material should
be fed over a comparatively large distance 96 to the
distribution member and that the place where the material
can be fed through the passages 100 and 109 near the
axis 64 to the distribution member should be displaceable with respect to the place where the material
is fed thorugh the passages 116 and 122 far from the
rotary axis 64 to the distribution member.

Thanks to the resultant adjustability of the
passages about the rotary axis 64 with respect to
the direction 69, the circumferential angle in which
the material leaves the circumference of the distribution
member can be varied within wide limits. It is important
that the  material flowing through the port formed
by the passages 100 and 109 should reach the distribution member further away from the circumference
thereof an hence should cover a longer path on the
distribution member than the material fed to the
distribution member through the port formed by the
passages 116 and 122. The ports formed by the passages 100 and 109 and the passages 116 and 122 can be disposed relatively to one another so that the flows from these ports reach the distribution member more or less separately and move along adjacent or contiguous paths of the distribution member towards the circumference there of so that the material can leave the circumference of the distribution member over a large circumferential angle. However, the dosing plates 82 to 85 can also be adjusted so that the material fed through the passages 100 and 109 to the distribution member moves towards the circumference thereof along a path which coincides with the path along which the material fed through the passages 116 and 122 will move to the circumference of said distribution member. When the two paths overlap one another, the material will leave the circumference of the distribution member over a relatively small circumferential angle.

A satisfactory feed of material to the distribution members is obtained when, viewed in a direction parallel to the rotary axes, the passages are located inside an imaginary circle 137 on which are located the inner ends 138 of the ejection blades 34. The speed of rotation of the distribution members and the place where the material is fed to the distribution members can be set so that the material can be spread at will in one of a large number of directions in sectors of selected width by each of the distribution members.

The location of the orifices 91 and the bottoms 80 and 81, the sense of rotation and the variable speed of rotation of the distribution members as well as the diameters thereof are chosen so that the distribution members can spread the material in coinciding sectors or in sectors coinciding partly or not coinciding at all.

The device is particularly suitable for spreading material in a manner such that the distribution members cover coinciding sectors. To this end the distribution members rotate in the opposite senses 125 and 126 whilst the delivery orifices 91 and the passages in the various dosing plates are located symmetrically on both sides of the plane 7 so that the distribution members spread the material in symmetry with respect to the vertical plane 7. In order to cover the widest possible strip of land during the movement of the device in the direction 69 the speed of rotation of the distribution members will be relatively high and the place of reception of the material on the distribution members will be set so that the material leaves the circumference of the distribution members in a large circumferential angle so that it is spread in a wide sector.

Figure 13 shows a position of the dosing plates 82 to 85 in which the material leaves the circumference of the distribution member in a circumferential angle 128 (Figures 4 and 13) of about 150°. To this end the passages 100 and 109 are set so that they form a port 129 which, with respect to the direction of rotation 126, leads with respect to a port 130 formed by the passages 116 and 122. The ports 129 and 130 constitute the outlets of the delivery means of the hopper formed by the bottom 80 and the dosing plates 82 to 85. Since the bottom 80 with the dosing plates 82 to 85 are in a horizontal position like the distribution member 4, the location of the ports 129 and 130 will correspond to the place where the material reaches the distribution member. Owing to said position of the ports 129 and 130 the material will arrive at the distribution member in a manner such that the material passing through the two ports will flow along adjacent paths of the distribution member towards the circumference thereof so that it reaches and passes beyond the circumference through the large circumferential angle 128. Above the distribution member 3 ports corresponding with the ports 129, 130 below the bottom 80 with the dosing plates 82 to 85 are set symmetrically to the plane 70 so that the distribution member 3 spreads the material through a circumferential angle 127 of about 150°. The sectors 134 and 135 thus covered by the distribution members 3 and 4 will be symmetrical to the vertical plane 7, whilst these sectors overlap one another completely (Figure 4). The locations of the circumferential angles 127 and 128 can be varied about the rotary axis 63 and 64 respectively by turning in common the dosing plates 82 to 85 about the respective rotary axes, whilst their relative positions are maintained. The ports 129 and 130 have to be kept within the angle 93 of the delivery orifice 91. This setting is important for the distribution of different kinds of material.

Figure 14 shows a position of the dosing plates 82 to 85 in which a port 131 is formed by the passages 100 and 109 and a port 132 formed by the passages 116 and 122. The ports 131 and 132 are in such relative positions that with respect to the direction of rotation 126 the port 132 leads with respect to the port 131. This disposition of the ports 131 and 132 results in that material passing through the port 131 reaches the distribution member and flows along a path towards the circumference of the distribution member which coincides with the path along which the material emanating from the port 132 moves towards the circumference of the distribution member. The sizes of the ports 131 and 132 are smaller than those of the ports 129 and 130 since the dosing plates 82 and 83 and the dosing plates 84 and 85 are relatively arranged so that the passages 100 and 109 and the passages 116 and 122 coincide only partly, owing to the selected setting of the dosing plates 84 and 85 relative to one another.

In the embodiment shown in Figure 14 the material will leave the circumference of the distribution member over an angle of about 45° so that the distribution member 4 will spread the material over a relatively narrow sector 136. In the case of a symmetrical disposition relative to the plane 7 of the dosing plates below the bottom 80 the distribution member 3 will spread the material on a sector lying symmetrically with respect to the vertical plane 7 with the sector covered by the distribution member 4.

In the disposition shown in Figure 14 the distribution members 3 and 4 will spread the material on nonoverlapping sectors so that during the run of the device the material is deposited on adjacent strips of land.

Within the extreme limits of the size of covered sectors indicated in Figures 13 and 14 many different sizes and positions of the sectors may be chosen by setting the dosing plates 82 to 85 relatively to one another and relatively to the bottom 80 or 81 concerned. The dosing plates can be set by means of the setting mechanisms (not shown in detail) with which the dosing plates are coupled. Therefore, the device is capable of spreading the material on very narrow strips as well as in very wide strips, whilst a satisfactory distribution pattern is invariably ensured.

It will be obvious that with such adjustability of the dosing plates a selected small or large quantity of material can be spread per unit of surface, whilst it is important that the surface to be covered in a single run can be widely varied at will. The material may be spread on wide strips during one run and on strips spaced apart from one another. Spreading on strips spaced apart from one another is important for treating row cultures.

As stated above the two distribution members can spread the material symmetrically about the plane 7, whilst the dosing plates 82 to 85 below the bottoms 80 and 81 are symmetrical to said plane 7. It is, however, also possible to cause one distribution member to spread the material in a way differing from the other distribution member. For example, one distribution member may spread the material in a direction differing from the spreading direction of the other distribution member. Moreover, the dosing plates of the two dosing mechanisms may be differently set in a manner such that the distribution members spread the material in sectors of different widths.

Although in the embodiment shown two distribution members are provided, it is also possible to use the construction of the dosing mechanism 36 with four dosing plates 82 to 85 as described above in a spreading device having only one distribution member adapted to move about a rotary axis.

From the above-described embodiment of the inventive idea it will be obvious that a construction according to the invention permits of working in different ways. Owing to the various modes of operation of a device embodying the invetion the device can be economically employed on large as well as small farms.

The relatively independently adjustable four dosing plates provide a large number of selectable settings. Since each dosing plate has two passages spaced apart by different distances from the rotary axis, a satisfactory distribution of the material on the distribution member is obtained, whilst the possibilities of adjustment are enhanced. In principle, it is possible to join the two passages to form a single opening. For example, the strip 102 between the passages 100 and 101 may be omitted.

In particular, if it is desired to spread a large amount of material per unit area, it is an advantage that a large quantity of material can be carried in each run. This is possible by mounting the extension 75 at the top of the hopper 2. When comparatively small quantities of material per surface unit have to be spread and in particular, when the material · need be spread in separate strips, the hopper 2 has, in general, sufficient capacity to carry material for one or more runs. The construction is particularly advantageous with a hopper 2 having a capacity of 400 litres and an extension piece 75 also having a capacity of 400 litres. Thus, when the extension piece is used, 800 litres of material can be carried.

The size and shape of the hopper 2 shown are such that it can be readily pressed from a single piece of metal or be made in a different way from a single piece of material. Making the hopper integrally from a piece of material can be simplified by using a small height 73 of the delivery spouts 59 and 60 as compared with the overall height 72. Thus the capacity of the hopper is maintained as large as possible. It may be advantageous to arrange the distribution members as closely as possible to one another and to use distribution members of moderate diameter so that the delivery spouts need not be spaced apart by a great distance. This structure of the hopper ensures, in addition, a satisfactory flow of material from the hopper thorugh the delivery spouts. .

In this embodiment the diameter 66 of the distribution members is about 35 cms and the distance 65 between the rotary axes 63 and 64 of the distribution members is about 37 cms. The delivery spouts 59 and 60 can thus be near one another, whilst the overall width of the hopper need not be excessively great. Moreover, owing to the comparatively small diameter and the disposition of the distribution members near one another the width of the frame may be small. Therefore the quantity of material required for constructing the device is minimized, which is conducive to the manufacture of the frame and the hopper.

The structure of the frame and the hopper shown ensures an advantageous and cheap manufacture. The height of the gear box 22 with the horizontal gear wheels 37 to 40 may be small, which is advantageous to obtain a low construction. The box 22 constitutes a satisfactory stiffening part between the beams 20 and a satisfactory support for the distribution members. Mounting and fixation of the gear box 22 can be readily carried out, since the lower panel 23 is rigidly connected with the beams 20 by means of the bolts 25, whilst the cover or upper panel 26 can be arranged on the beams 20 independently of the fixation of the lower tray 23.

The diameter of the distribution members may very advantageously be kept small, whilst nevertheless the material can be spread over a large width, when the distribution members can be rotated at a comparatively high speed. Preferably the speed of rotation exceeds about 1040 rev/min so that the spreading width may amount to, for example, 24 metres. An advantageous speed of rotation of the distribution members may, for example, be 1500 rev/min. Driving the distribution members by means of gear wheels, the distribution members being intercoupled by the four gear wheels 37 to 40, ensures a reliable operation, whilst the relative positions of the distribution members is maintained.

The adjustment of the speed of rotation of the distribution members can be simply carried out by removing the cover 51 and replacing the gear wheels 46 and 47 by a different set of gear wheels or by interchanging them. The cover 51 can, to this end, be readily disengaged from the gear box 43. The adjustment of the speed of rotation ensures a satisfactorily controllable spreading width and a uniform distribution.

The beams 11 and 10 of the frame 1, together with the beam 13 and the gear box 22 constitute a satisfactory connection between the two curved side beams 5 and 6. The hole 12 in the beam 11 can be used to attach a further implement to the device, for example, a trailer carrying material to be spread.

Whilst various features of the spreader that have been described, and that are illustrated in the drawings, will be set forth in the following claims as inventive features, it is to be noted that the invention is not necessarily limited to these features and that it encompasses all of the features that have been described both individually and in various combinations.

CLAIMS

1.      A device for spreading granular and/or powdery material, such as fertilizer, seeds or suchlike material, comprising a frame (1) having a hopper (2) and at least one distribution member (3, 4) adapted to move about a rotary axis (63,64) characterized in that the hopper (2) is provided with delivery means (86) which are movable with respect to the hopper (2) in a manner such that the place where the material is fed to the distribution member (3, 4) is displaceable about the rotary axis (63, 64) of the distribution member (3, 4)  and/or in a radial direction with respect to the rotary axis (63, 64) of the distribution member (3, 4), the circumferential angle (133, 134, 135) through which the material leaves the circumference of the distribution member (3, 4) being adjustable.

2.      A device as claiemd in claim 1, characterized in that the delivery means (86) are designed and adjustable in a manner such that a part of the feeding place nearer the rotary axis (63, 64) of the distribution member (3, 4) and a part of the feeding place further from the rotary axis (63, 64) of the distribution member (3, 4) are relatively adjustable about the rotary axis of the distribution member.

3.      A device as claimed in claim 1 or 2, characterized in that the place where the material is fed to the distribution member is defined by two spaced outlet ports (129, 130) provided by the delivery means (86).

4.      A device as claimed in claim 3, characterized in that the ports (129, 130) of the delivery means (86) are formed by at least one delivery orifice (91) in the bottom (81) of the hopper (2) and/or by one or more passages (100, 109, 116, 112) in one or more dosing plates (82, 83, 84, 85) adjustable with respect to the bottom (81).

5.      A device as claimed in claim 3 or 4, characterized in that one port (130) is spaced apart from the rotary axis of the distribution member by a larger distance than the other port (129).

6.    A device as claimed in claim 4 or 5, characterized in that the delivery orifice (91) in the bottom (81) is located in front of the rotary axis of the distribution member, viewed with respect to the intended direction (69) of operative travel of the device during operation, and extends to both sides of a plane (92) containing the rotary axis (63, 64) of the distribution member (3, 4) and extending in the travel direction (69).

7.    A device as claimed in claim 6, characterized in that the delviery orifice (91) extends around the rotary axis (63, 64) through a circumferential angle (95) on one side of the vertical plane (92) at least substantially twice the circumferential angle (94) through which extends the delivery orifice (91) on the other side of said plane (92).

8.    A device as claimed in anyone of claims 4 to 7, characterized in that the bottom (81) is adjoined by two dosing plates (82, 83; 84, 85), each of which has two passages (100, 101; 109, 110; 115, 116; 121, 122) spaced apart radially from one another, the passages in one dosing plate having a different shape and/or a different disposition from the passages in the other dosing plate, the passages being closable to a greater or lesser extent independently of one another.

9.    A device as claimed in claim 8, characterized in that four dosing plates (82, 83, 84, 85) are provided near the bottom (81), the plates comprising two sets each of two identical dosing plates.

10.    A device as claimed in any one of claims 4 to 9, characterized in that at least one dosing plate (82, 83) has two passages extending through unequal angles about the rotary axis of the distribution member (3, 4), the passage (100, 109) covering the smaller angle being located nearer the rotary axis than the other passage (101, 110).

11. A device as claimed in any one of claims 4 to 10, characterized in that at least one dosing plate (84, 85) is provided, which has two delivery passages, one of which extends through a larger angle about the rotary axis of the distribution member than the other passage, the passage (116, 122) covering the smaller angle about the rotary axis being radially further from the rotary axis than the other passage (115, 121).

12. A device as claimed in claim 10 or 11, characterized in that the smaller passage in each dosing plate, independently of the smaller passage in another dosing plate, can be closed to a greater or lesser extent and/or is adjustable about the rotary axis of the distribution member and can be fixed at will in any one of a plurality of positions.

13. A device as claimed in any one of claims 4 to 12, characterized in that the dosing plates (82, 83, 84, 85) are displaceable independently of and relatively to one another, at will to one of a plurality of positions and fixable therein.

14. A device as claimed in any one of claims 8 to 13, characterized in that the passage located nearest the rotary axis has the same radial dimension as the other passage.

15. A device as claimed in any one of the preceding claims, characterized in that, as viewed in a direction parallel to the rotary axis of the distribution member, ports of the delivery means (86) open out of the distribution member (3, 4) within an imaginary circle (137) on which are located the radially inner ends (138) of ejection blades (34) of the distribution member (3, 4).

16. A device as claimed in any one of the preced-

-24-

ing claims, characterized in that the delivery means (86) are located at a relatively short distance above the distribution member (3, 4).

17. A device as claimed in any one of the preceding caims, characterized in that two distribution members (3, 4) are provided, each of which is adjoined by delivery means (86) in accordance with the delivery means of any one of the preceding claims, the two distribution members (3, 4) and delivery means (86) being located symmetrically about the vertical plane (7) going through the longitudinal centre line of the device.

18. A device as claimed in claim 17, characterized in that each distribution member (3, 4) is provided with at least one ejection blade (34) and the blades of the two distribution members are relatively off-set in a manner such that the ejection blades of the two distribution members pass alternately the point where the distribution members are nearest one another.

19. A device as claimed in claim 17 or 18, characterized in that the dosing plates near one distribution member are adjustable independently of the dosing plates near the other distribution member.

20. A device as claimed in any one of the preceding claims, characterized in that the distribution member(s) is(are) coupled with driving means comprising an adjusting mechanism by which the speed of rotation of the distribution member(s) is adjustable.

21. A device as claimed in any one of the preceding claims, characterized in that the distribution member(s) is(are) coupled with driving means in a manner such that during operation of the device they can be rotated with a speed of at least 1040 rev/min.

22. A device as claimed in any one of claims 17 to 21, characterized in that the distribution members

0074154

are arranged on relatively parallel shafts each of which is provided with a gear wheel, whilst at least one other gear wheel is arranged between said two gear wheels.

23. A device as claimed in any one of the preceding claims, characterized in that the distribution member(s) have their parts furthest remote from one another located on a circle having a diameter of about 35 cms.

24. A method of spreading fertilizer, seeds or suchlike material, in which during a run the device spreads the material over two sectors, the width of at least one of which is adjustable.

FIG.1

FIG.2

**FIG.3**

**FIG.4**

FIG.5

FIG.6

FIG.8

FIG.7

FIG.9

FIG.10

FIG.11

FIG.12

FIG.13

FIG.14

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | --- | | A 01 C 17/00 |
| A | GB-A-1 493 525 (LISTER & CO.) <br><br> * page 4, lines 55-130; page 5, page 6, lines 1-15; figures 5,6,7 * | 1,2,3, 4,8 | |
| | --- | | |
| A | FR-A-1 097 241 (MARCELIN) <br> * page 1, right-hand column; page 2, left-hand column; figures 1,2,3 * | 1,3,4 | |
| | --- | | |
| A | FR-A- 952 943 (DOSSMANN) <br> * page 2, lines 35-80; figures 1-5 * | 1 | |
| | ----- | | |

| TECHNICAL FIELDS SEARCHED (Int. Cl. ³) |
|---|
| A 01 C |

The present search report has been drawn up for all claims

| Place of search | Date of completion of the search | Examiner |
|---|---|---|
| THE HAGUE | 17-12-1982 | VERMANDER R.H. |